# FASCICULE DE BREVET EUROPEEN

(11) **EP 3 787 798 B1**
(45) Date de publication et mention de la délivrance du brevet: **31.08.2022**
(21) Numéro de dépôt: 19720673.3
(22) Date de dépôt: 03.05.2019
(51) Int. Cl.: B03C 3/41, B03C 3/86, B01D 49/00, B03C 3/49

(54) **SYSTÈME DE COLLECTE ÉLECTROSTATIQUE DE PARTICULES OU DE MICRO-ORGANISMES**
SYSTEM ZUM ELEKTROSTATISCHEN SAMMELN VON PARTIKELN ODER MIKROORGANISMEN
SYSTEM FOR ELECTROSTATIC COLLECTION OF PARTICLES OR MICROORGANISMS

(30) Priorité: 04.05.2018 FR 1853905
(43) Date de publication de la demande: 10.03.2021
(73) Titulaire: Bertin Technologies, 78180 Montigny-le-Bretonneux (FR)
(72) Inventeur: CELLIERE, Florian, 13710 Fuveau (FR); DUVAUCHELLE, Laure, 78220 Viroflay (FR)
(74) Mandataire: Hautier IP
(86) Numéro de dépôt international: PCT/EP2019/061378
(87) Numéro de publication internationale: WO 2019/211439

(56) Documents cités:
- DE-U1-202015 106 928
- FR-A1- 3 022 806
- JP-A- H1 176 862
- US-A1- 2006 180 027

## Description

### DOMAINE

La présente invention concerne un système de collecte électrostatique de particules et/ou de micro-organismes en suspension dans un milieu gazeux et un collecteur électrostatique ou électrofiltre.

### CONTEXTE

La détection et l'analyse des particules et/ou de micro-organismes solides ou liquides en suspension dans un milieu gazeux tel que l'air ambiant constituent une préoccupation actuelle majeure, que ce soit pour la surveillance de la qualité de l'air, pour protéger les populations d'agents pathogènes aéroportés (légionelles, grippe, etc.) ou pour des enjeux de sécurité (détection d'attaques biologiques ou chimiques) ou de santé publique (détection de particules fines par exemple).

Des collecteurs électrostatiques ou électrofiltres, couramment désignés par l'acronyme d'origine anglo-saxonne ESP (Electrostatic Precipitator »), permettent de collecter des particules en suspension dans un milieu gazeux, par exemple l'air ambiant. Ils permettent aussi de purifier le milieu gazeux environnant et éventuellement d'analyser les particules collectées.

Un collecteur électrostatique comprend deux électrodes disposées à proximité l'une de l'autre. Une première électrode est couramment appelée électrode de décharge et une seconde électrode est couramment appelée contre-électrode ou électrode de collecte. Un champ électrique élevé est induit entre les deux électrodes sous l'effet d'une différence de potentiel appliquée entre les deux électrodes. Le champ électrique ionise le volume de gaz situé entre les deux électrodes, créant une gaine ou couronne de gaz ionisé située autour de l'électrode de décharge. Ce phénomène est appelé décharge couronne. Le gaz contenant les particules à séparer que l'on fait transiter entre l'électrode de décharge et l'électrode de collecte traverse alors un flux d'ions et les particules à séparer sont ionisées à leur tour. Sous l'effet des forces électrostatiques, les particules chargées ainsi créées sont attirées par l'électrode de collecte sur laquelle elles sont collectées. Du fait de l'intensité du champ électrique requis, il est nécessaire d'utiliser une électrode de décharge qui a un très faible rayon de courbure pour ainsi réduire la tension électrique à appliquer. Les électrodes de décharge rencontrées sont donc généralement soit des pointes soit des fils.

Si le principe de fonctionnement est clair, il ressort que la mise en oeuvre du principe physique est plus délicate tout d'abord du fait des hautes tensions nécessaires, de plusieurs milliers à plusieurs dizaines de milliers de volts. En effet, ces dispositifs doivent pouvoir supporter plusieurs contraintes d'utilisation.

En outre, le positionnement de l'électrode de décharge requiert parfois une précision élevée. De plus, l'électrode de décharge doit pouvoir être maintenue dans une position fixe par rapport à la contre-électrode, et cela quelle que soit l'orientation du collecteur électrostatique.

Il se pose donc le problème de pouvoir remplacer une électrode d'un collecteur électrostatique par une autre électrode en toute sécurité quelle qu'en soit la raison (usure...).

Il se pose également le problème de pouvoir positionner une électrode dans un collecteur électrostatique avec une précision élevée, et de maintenir l'électrode dans sa position quelle que soit l'orientation du collecteur électrostatique.

Egalement, ces dispositifs doivent pouvoir admettre l'injection d'un liquide ou de vapeur pour améliorer leurs performances de collecte et/ou améliorer la récupération proprement dite des particules collectées par effet électrostatique.

La mise en œuvre de ce principe physique est en outre particulièrement délicate lorsque l'on souhaite réaliser des dispositifs compacts, pour qu'ils soient transportables voire portables. En effet, dans des dispositifs compacts, il s'avère délicat d'assurer l'isolation électrique entre électrode de décharge et contre-électrode (électrode de collecte), cette isolation étant usuellement obtenue par éloignement entre elles.

On connait des systèmes de collecte électrostatique mais aucun n'est simple et pratique à utiliser en milieu extérieur. De plus, il s'avère souvent difficile voire impossible de récupérer les électrodes de décharge et de collecte.

Egalement, dans les systèmes connus, la mise en place du collecteur s'avère longue et fastidieuse puisqu'elle requiert plusieurs étapes successives de montage et d'assemblage des éléments du collecteur et de mise en place de celui-ci pour réaliser la collecte. Ces systèmes ne permettent pas d'envisager une utilisation aisée (en extérieur, par un non-spécialiste, rapide...) d'un système de collecte électrostatique.

Le document DE 20 2015 106928 U1 décrit un dispositif de purification de gaz de combustion. Ce dispositif ne permet toutefois de faciliter le montage voire la récupération des électrodes de décharge et de collecte.

L'invention a notamment pour but d'apporter une solution simple, efficace et économique aux problèmes de l'art antérieur décrit précédemment.

A toutes fins utiles, il est précisé que l'exposé ci-dessus a pour seul objectif d'améliorer la compréhension de l'environnement ou contexte technologique de la présente invention. Ainsi, il peut contenir des informations qui ne font pas partie en tant que telles de l'état de la technique qui est déjà connu dans ce pays par l'homme du métier de sorte que les informations qu'il contient ne peuvent en l'état être opposées à la demanderesse.

### RESUME DE L'INVENTION

Le présent document concerne tout d'abord un système de collecte électrostatique de particules et/ou de micro-organismes en suspension dans un milieu gazeux, tel que l'air ambiant, comprenant un collecteur électrostatique et un boîtier de support du collecteur électrostatique :
- le collecteur comprenant :
   ∘ une chambre de collecte de forme tubulaire orientée selon un premier axe,
   ∘ une électrode de décharge, de forme allongée, s'étendant selon le premier axe,
   ∘ une électrode de collecte disposée à l'intérieur de la chambre de collecte,
- le boîtier comprenant une première borne électrique apte à porter l'électrode de décharge à un premier potentiel et une seconde borne électrique apte à porter l'électrode de collecte à second potentiel supérieur au premier potentiel,
caractérisé en ce qu'il comprend en outre des moyens de réception du collecteur articulés à déplacement sur le boîtier entre une première position de montage du collecteur dans les moyens de réception et une seconde position de collecte dans laquelle la première borne électrique réalise une liaison électrique avec l'électrode de collecte et la seconde borne électrique réalise une liaison électrique avec l'électrode de décharge.

Le système selon l'invention s'avère simple à utiliser puisqu'il intègre des moyens de réception articulés à déplacement sur le boitier qui sert au support du collecteur lorsque celui-ci est dans sa seconde position de collecte. Ainsi, un opérateur peut disposer un collecteur directement dans les moyens de réception et ensuite déplacer les moyens de réception de la première position de montage à la seconde position de collecte pour mettre en contact électrique l'électrode de décharge avec la première borne électrique et l'électrode de collecte avec la seconde borne électrique.

Dans le cadre de l'invention, on entend par électrode de décharge ayant une forme allongée un élément conducteur électrique ayant un typiquement un diamètre compris entre 10 et quelques centaines de micromètres et apte à être alimenté sous une tension électrique compris entre quelques kilovolts à quelques dizaines de kilovolts.

Le présent document concerne également un système de collecte électrostatique de particules et/ou de micro-organismes en suspension dans un milieu gazeux comprenant un collecteur électrostatique et un boîtier de support du collecteur électrostatique :
- le collecteur comprenant :
   ∘ un premier ensemble comportant une première partie et une électrode de collecte disposée dans la première partie qui délimite une chambre de collecte de forme tubulaire orientée selon un premier axe,
   ∘ un second ensemble comportant une électrode de décharge, de forme allongée, s'étendant selon un premier axe,
- le boîtier comprenant une première borne électrique apte à porter l'électrode de collecte à un premier potentiel et une seconde borne électrique apte à porter l'électrode de décharge à second potentiel,
caractérisé en ce qu'il comprend en outre des moyens de réception d'au moins l'un du premier ensemble et du second ensemble du collecteur, ces moyens de réception étant articulés à déplacement sur le boîtier entre une première position de montage dudit au moins un premier ensemble et un second ensemble du collecteur dans les moyens de réception et une seconde position de collecte dans laquelle la première borne électrique réalise une liaison électrique avec l'électrode de collecte et la seconde borne électrique réalise une liaison électrique avec l'électrode de décharge.

Lorsque le premier ensemble et le second ensemble, formant en semble le collecteur, ne sont pas solidaires l'un de l'autre, il est ainsi possible de monter le premier ensemble ou le second ensemble dans les moyens de réception qui sont déplaçables. Dans cette configuration, ledit premier ensemble ou second ensemble qui n'est pas montée dans les moyens de réception est alors montée à demeure, c'est-à-dire préassemblée en position de collecte sur le boîtier. Ainsi, l'ensemble montée dans les moyens de réception vient s'assembler à l'autre ensemble de manière à reconstitue le collecteur en position de collecte.

Les moyens de réception comprennent un fourreau dont une extrémité est articulée en rotation selon un second axe sur le boîtier et dont l'autre extrémité délimite une ouverture pour l'introduction d'une première portion tubulaire du collecteur dans le fourreau.

Ainsi, la première portion tubulaire du collecteur est introduite dans le fourreau qui retient le collecteur et le déplacement du fourreau assure la mise en positon du collecteur en position de collecte.

Dans une configuration particulière de l'invention, la première borne électrique et la seconde borne électrique sont alignées selon un troisième axe sensiblement parallèle au premier axe lorsque les moyens de réception sont dans la seconde position de collecte. Dans cet agencement, le troisième axe pourra être, en utilisation, vertical et le second axe pourra être horizontal.

Egalement, le troisième axe peut être perpendiculaire au second axe et l'axe du fourreau peut former, en position de montage, un angle non nul avec le troisième axe et avec un quatrième axe perpendiculaire au second et troisième axes. Ainsi, on comprend que lorsque le quatrième axe et le second axe sont horizontaux et que le troisième axe est vertical, alors le fourreau est incliné par rapport à un plan horizontal de manière à permettre une introduction par gravité de la première partie tubulaire du collecteur dans le fourreau.

Avantageusement, les moyens de réception comprennent au moins une enveloppe réalisée dans un matériau, par exemple métallique ou un composite chargé, apte à réaliser une cage de Faraday autour du collecteur. L'intégration de l'enveloppe en matériau métallique au fourreau permet la mise en position de collecte du collecteur sans avoir à ajouter ultérieurement des moyens réalisant la fonction de cage de Faraday. Cette enveloppe évite de créer un champ électrostatique externe qui repousserait les particules de l'entrée d'air du collecteur.

Selon une autre caractéristique de l'invention, la première borne électrique comprend une tige de connexion électrique faisant saillie à l'extérieur du boîtier et dans lequel les moyens de réception comprennent une ouverture traversée par ladite tige lorsque les moyens de réception sont dans la seconde position de collecte de manière à ce que l'extrémité libre de la tige vienne en contact avec l'électrode de collecte.

Dans une réalisation pratique de l'invention, un revêtement électriquement isolant recouvre le pourtour de ladite ouverture, pour éviter de créer un arc électrique avec l'enveloppe métallique intégrée au fourreau.

La seconde borne électrique comprend, de préférence, un organe qui peut être élastique ou réalisée dans un matériau déformable élastiquement apte à être contraint élastiquement sur l'électrode de décharge lorsque le collecteur est en position de collecte.

Le boîtier peut également comprendre des moyens de solidarisation des moyens de réception dans la seconde position de collecte. Cela permet de bloquer le collecteur sur le boitier en position de collecte. Des moyens peuvent également être prévu tels qu'un contacteur venant en contact avec le collecteur lorsque celui-ci est en position de collecte, afin de vérifier qu'un collecteur est en position dans les moyens de réception. Ce contacteur peut agir comme un coupe-circuit permettant de couper l'alimentation électrique de la première borne électrique et de la seconde borne électrique.

Les moyens de solidarisation, pouvant être désignés de façon équivalente par éléments de solidarisation, peuvent ainsi comprendre, dans un exemple de réalisation, un premier moyen aimanté, pouvant être désigné de façon équivalente par le terme premier aimant, porté par le boîtier et un second moyen aimanté, pouvant être désigné de façon équivalente par le terme deuxième aimant, porté par les moyens de réception, le premier moyen aimanté et le second moyen aimanté étant aptes à exercer l'un sur l'autre une force d'attraction.

Le présent document concerne également un collecteur électrostatique de particules et/ou de micro-organismes en suspension dans un milieu gazeux, par exemple dans l'air, comprenant :
- une chambre de collecte de forme tubulaire orientée selon un premier axe,
- une électrode de décharge, de forme allongée, s'étendant selon le premier axe,
- une électrode de collecte disposée à l'intérieur de la chambre de collecte, caractérisé en ce que le collecteur comprend un premier ensemble comportant l'électrode de collecte et un second ensemble structurellement distinct du premier ensemble et comportant l'électrode de décharge, le premier ensemble comprenant des premiers moyens de liaison réalisant avec des seconds moyens de liaison du second ensemble une liaison rigide détachable du premier ensemble avec le second ensemble.

Ce collecteur est apte être utilisé au sein du système précédemment décrit ou dans tout autre système électrostatique. Ce collecteur présente l'avantage d'être réalisé en deux ensembles structurellement distincts l'un de l'autre, autorisant ainsi un assemblage des deux ensembles pour réaliser une collecte et un désassemblage des deux ensembles après collecte. Ainsi, on peut récupérer le premier ensemble et le fermer à ses deux extrémités avec des bouchons d'obturation après y avoir inséré le réactif souhaité, le cas échéant.

Le présent document concerne encore un collecteur électrostatique de particules en suspension dans l'air comprenant :
- un premier ensemble comportant une première partie et une électrode de collecte disposée dans la première partie qui délimite une chambre de collecte de forme tubulaire orientée selon un premier axe,
- un second ensemble comportant une électrode de décharge, de forme allongée, s'étendant selon un premier axe,
caractérisé en ce que le premier ensemble et le second ensemble sont structurellement distincts l'un de l'autre, le premier ensemble comprenant des premiers moyens de liaison réalisant avec des seconds moyens de liaison du second ensemble une liaison rigide détachable du premier ensemble avec le second ensemble.

Préférentiellement :
- le premier ensemble comprend la ou une première partie comportant une première portion tubulaire dans laquelle l'électrode de collecte est centrée et/ou bloquée axialement dans un premier sens du premier axe, et/ou
- le second ensemble comprend une seconde partie comportant une seconde portion tubulaire dans laquelle l'électrode de collecte est centrée et/ou bloquée axialement dans un second sens du premier axe.

Cet agencement permet de réaliser un centrage de l'électrode de collecte dans les première et seconde portions tubulaires autorisant ainsi une coaxialité parfaite entre l'électrode de décharge et l'électrode de collecte qui peut présenter la forme d'un anneau, dès lors que l'électrode de décharge est également centrée sur la seconde portion tubulaire. De plus, le blocage axial de l'électrode de collecte dans les deux sens du premier axe, à la fois sur la première portion tubulaire et sur la seconde portion tubulaire permet d'assurer un positionnement axial optimal de l'électrode de décharge par rapport à l'électrode de collecte. Le contrôle de cette position axiale s'avère important pour garantir la formation du courant d'ionisation des particules.

On comprend également qu'avec cet agencement, l'électrode de collecte peut être aisément retirée de la première portion tubulaire, en vue notamment de son nettoyage pour une nouvelle utilisation ultérieure ou de son remplacement.

Selon une caractéristique de l'invention, la première portion tubulaire comprend les premiers moyens de liaison et la seconde portion tubulaire comprend les seconds moyens de liaison.

L'électrode de collecte peut être bloquée axialement dans ledit premier sens sur un épaulement annulaire formée radialement à l'intérieur de la première portion tubulaire. L'électrode de collecte peut être bloquée axialement dans ledit second sens sur un épaulement annulaire formée radialement à l'intérieur de la seconde portion tubulaire.

Pour réaliser une alimentation en particules d'intérêt, la seconde portion tubulaire peut comprendre au moins une ouverture latérale d'entrée d'air. La ou les ouvertures latérales peuvent être entourées extérieurement par une jupe, par exemple à section sensiblement rectangulaire. Cette jupe vise à limiter l'introduction de particules de gros diamètres qui auraient tendance à passer par l'entrée d'air en l'absence de la jupe. Notons que dans une autre réalisation, des orifices pourraient être réalisées dans la jupe.

L'électrode de décharge peut comprendre une première extrémité libre agencée au voisinage du débouché d'une première extrémité de la seconde portion tubulaire qui est destinée à être fixée de manière détachable à la première portion tubulaire.

L'électrode de décharge peut encore comprendre une seconde extrémité formée par une platine appliquée sur une face externe de la seconde partie.

Egalement, l'électrode de collecte peut comporter une première extrémité agencée au voisinage du débouché d'une première extrémité de la première portion tubulaire qui est destinée être fixée de manière détachable à la seconde portion tubulaire.

En outre, la première portion tubulaire peut comprendre un orifice débouchant sur une face externe de l'électrode de collecte. Cet orifice externe est destiné à être mis en vis-à-vis de l'ouverture des moyens de réception afin de réaliser une alimentation électrique de l'électrode de collecte lorsque le collecteur est dans sa seconde position de collecte sur le boîtier.

Dans une réalisation particulière de l'invention, l'électrode de collecte peut être un anneau et l'électrode de décharge peut avoir la forme d'une aiguille.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'un système de collecte électrostatique selon l'invention ;
- la figure 2 est une vue schématique à plus grande échelle du collecteur électrostatique monté sur un boitier du système de collecte ;
- la figure 3 est une vue schématique en perspective du système de collecte, les moyens de réception du collecteur étant dans une première position de montage du collecteur lequel n'est pas représenté ;
- la figure 4 est une vue schématique en perspective du système de collecte, les moyens de réception du collecteur étant dans la première position de montage du collecteur et le collecteur étant monté dans les moyens de réception ;
- la figure 5 est une vue schématique en perspective du système de collecte, les moyens de réception du collecteur étant dans une seconde position de connexion électrique du collecteur à des moyens d'alimentation électrique, le collecteur étant monté dans les moyens de réception ;
- la figure 6 est une vue schématique en perspective du système de collecte, dans lequel des éléments ont été supprimés pour mieux visualiser la connexion électrique des électrodes de décharge et de collecte aux moyens d'alimentation électrique ;
- les figures 7A et 7B sont des vues schématiques en perspective d'un collecteur selon l'invention ;
- la figure 7C est une vue schématique du collecteur des figures 7A et 7B, selon un plan de coupe passant par un premier axe ;
- la figure 8 est une vue schématique d'un second ensemble du collecteur selon l'invention ;
- la figure 9 est une vue schématique du premier ensemble et du second ensemble du collecteur selon l'invention ;
- la figure 10 est une vue schématique en perspective d'une première portion tubulaire d'une première partie du collecteur, l'électrode de décharge n'étant pas représentée ;
- la figure 11 est une vue schématique similaire à la figure 10 avec l'électrode de décharge ;
- les figures 12A et 12B sont des vues schématique en perspective de l'électrode de décharge ;
- les figures 13A et 13B sont des vues schématique en perspective de l'électrode de collecte ;
- les figures 14A-14E illustrent les différentes étapes subséquentes à une phase de collecte.

### DESCRIPTION DETAILLEE

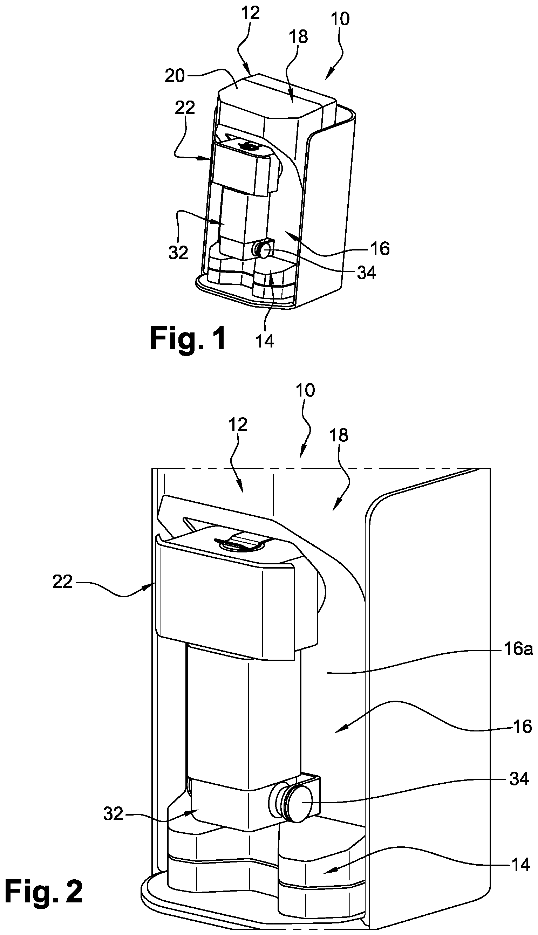

On se réfère tout d'abord aux figures 1 et 2 qui représentent un système 10 de collecte électrostatique de particules en suspension dans l'air selon l'invention. Le système 10 comprend un boitier 12 logeant une alimentation électrique ainsi que l'électronique de puissance pour la réalisation du champ électrostatique souhaité. Le boîtier 12 est formé d'une embase 14 ou pied de support relié par une partie intermédiaire 16 à une partie supérieure 18 comportant sur une face supérieure une interface 20 de commande du système 10 selon l'invention. Cette interface 20 peut par exemple comprendre une pluralité de boutons disposés de part et d'autre d'un écran de visualisation. En pratique, on comprend que le système 10 doit pouvoir être disposé dans des environnements humides de sorte que le boitier 12 devra donc être hermétique.

Comme représenté sur les figures 1 et 2, le système 10 comprend un dispositif de collecte électrostatique de particules ou collecteur 22 électrostatique qui est sur ces figures porté par le boitier 12.

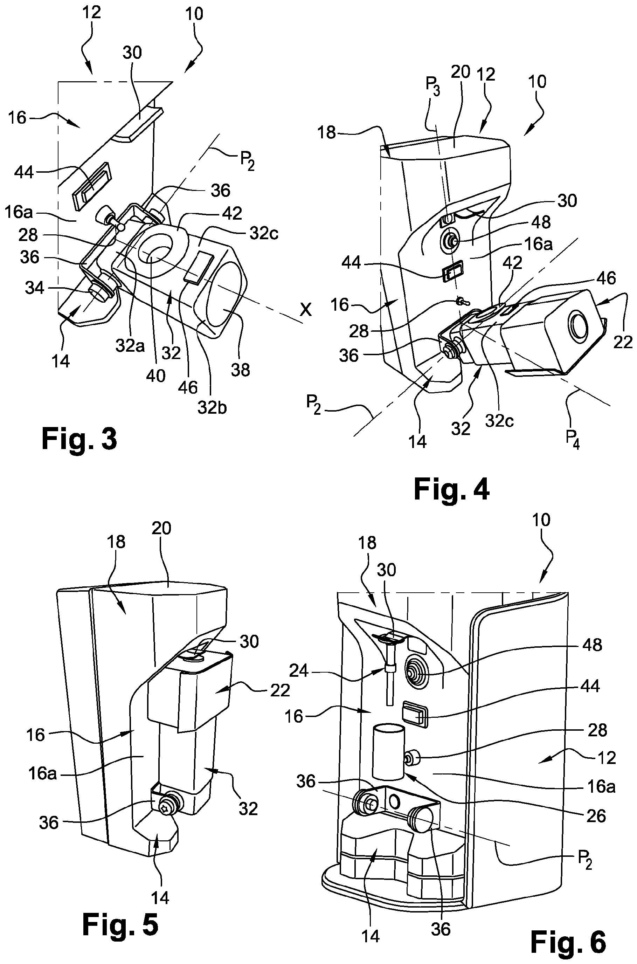

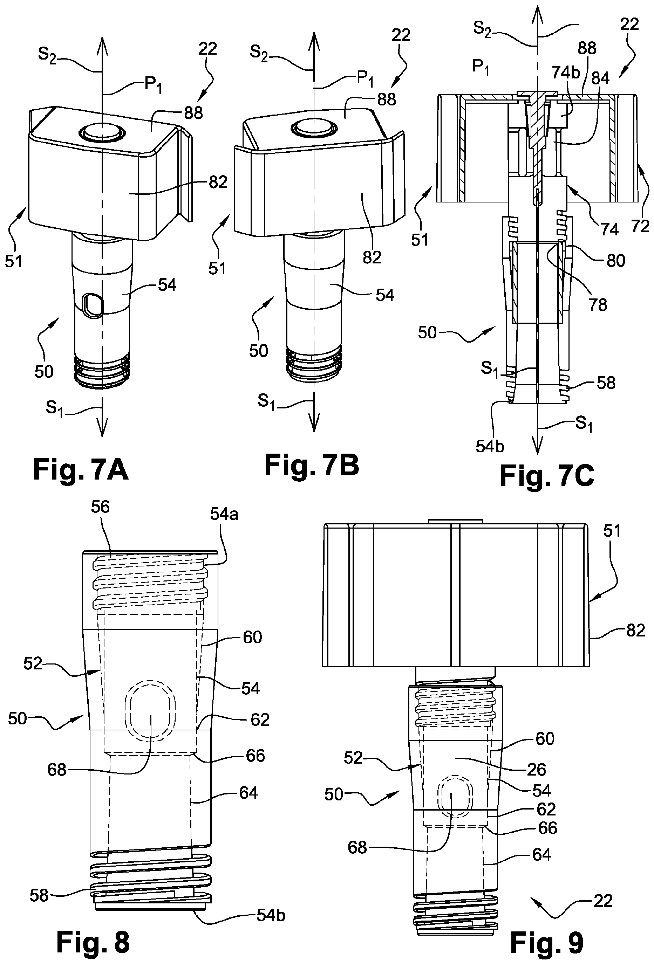

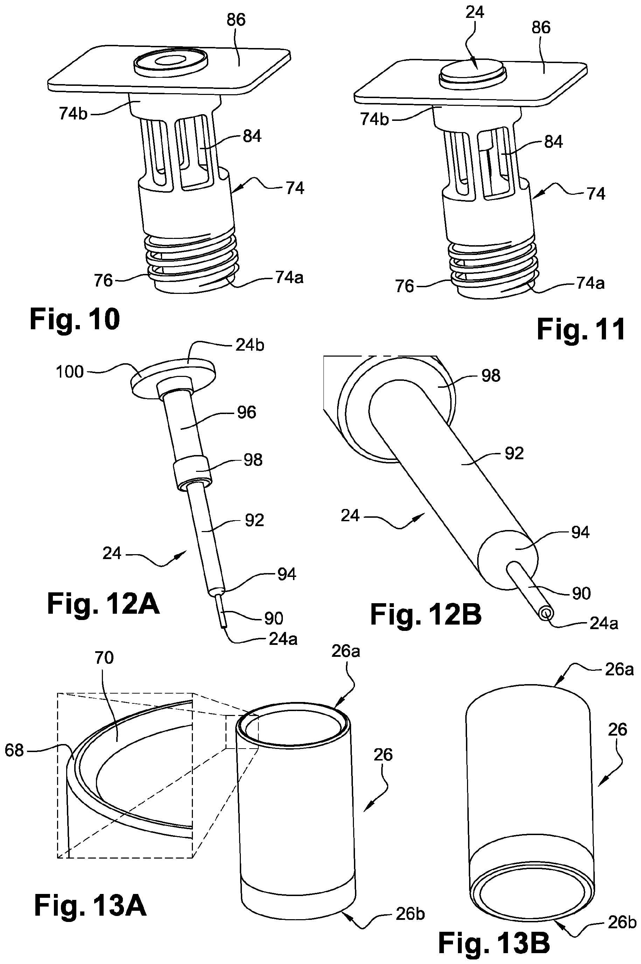

En préalable à la description du boitier 12, il est donné une description succincte du collecteur 22 aux fins de compréhension de l'interaction du collecteur 22 avec les différents éléments du boitier 12. Ainsi, le collecteur 22 comprend une chambre de collecte de forme tubulaire orientée selon un premier axe P1 (figures 7A, 7B, 7C), une électrode de décharge 24 (figures 12A et 12B), de forme allongée, s'étendant selon le premier axe P1 (figures 7A, 7B et 7C), et une électrode de collecte 26 (figures 13A et 13B) disposée à l'intérieur de la chambre de collecte. Les électrodes 24, 26 sont visibles en position sur le boitier 12 en figure 6, les autres éléments constitutifs du boitier 12 et du collecteur 22 ayant été retirés pour mieux voir les liaisons électriques des électrodes 24, 26.

On se réfère maintenant aux figures 3 à 6 mais la figure 2 peut également être considérée. Le système 10 selon l'invention comprend une première borne électrique 28 apte à porter l'électrode de collecte 26 à un premier potentiel et une seconde borne électrique 30 apte à porter l'électrode de décharge à second potentiel inférieur au premier potentiel. La première borne électrique 28 est portée par la partie intermédiaire 16 du boitier 12 et est formée par une tige de connexion électrique faisant saillie à l'extérieur du boîtier 12 selon une direction sensiblement horizontale. La seconde borne électrique 30 est également portée par la partie intermédiaire 16 du boitier 12 et est conformée de manière à être déformable élastiquement pour être contraint élastiquement sur l'électrode de décharge 30 lorsque le collecteur 22 est en position de collecte comme cela est visible sur les figures 2, 5 et 6. Comme on peut le voir, plus particulièrement sur la figure 6, la partie supérieure 18 du boitier 12 comprend un surplomb recouvrant verticalement la première borne électrique 28 et la seconde borne électrique 30. Le surplomb permet de protéger la seconde borne électrique 30. Par ailleurs, le surplomb réalise également une fonction de protection contre la pluie de la seconde borne électrique 30 et des autres composants agencés sous le surplomb.

Selon l'invention, le système 10 comprend des moyens de réception du collecteur articulés à déplacement sur le boitier 12 entre une première position (figures 3 et 4) de montage du collecteur 22 dans les moyens de réception et une seconde position (figures 2 et 5) de collecte dans laquelle la première borne électrique 28 réalise une liaison électrique avec l'électrode de collecte 26 et la seconde borne électrique 30 réalise une liaison électrique avec l'électrode de décharge 24. De façon équivalente, des moyens de réception du collecteur peuvent être désignés par dispositif de réception articulé. Dans l'exemple de réalisation représenté aux figures, les moyens de réception sont formés par un fourreau 32 comportant un évidement tubulaire d'axe X et dont une première extrémité 32a est solidaire d'une tige 34. La tige 34 s'étend selon un second axe P2 sensiblement perpendiculaire à l'axe X du fourreau 32, ce second axe P2 étant perpendiculaire au premier axe P1 du collecteur 22 lorsque le collecteur 22 est dans sa seconde position de collecte. Cette tige 34 est articulée en rotation sur deux chapes 36 solidaires de la partie intermédiaire 16 du boitier 12. La seconde extrémité 32b du fourreau 32 comprend une ouverture 38 pour l'introduction d'une première portion tubulaire du collecteur 22 dans le fourreau 32. Cette portion tubulaire du collecteur 22 sera décrite en relation avec le collecteur 22 décrit aux figures 7A, 7B, 7C, 8 et 9. On remarque que la première borne électrique 28 et la seconde borne électrique 30 sont alignés selon un troisième axe P3 (figure 4), sensiblement vertical en position d'utilisation, et sensiblement parallèle au premier axe P1 du collecteur 22 et à l'axe X du fourreau 32 lorsque le fourreau 32 est dans la seconde position de collecte.

Pour pouvoir positionner aisément le collecteur 22 dans le fourreau 32, l'articulation en rotation est prévue pour que l'axe X du fourreau 32 forme, en position de montage, un angle non nul avec le troisième axe P3 et avec un quatrième axe P4 perpendiculaire au second axe P2 et au troisième axe P3. En pratique, lorsque le second axe P2 est positionné verticalement, alors le quatrième axe P4 est horizontal et l'axe X du fourreau 32 est incliné par rapport à un plan horizontal. De préférence, l'axe X du fourreau 32 est incliné d'un angle compris entre 30° et 70° par rapport à un plan horizontal. On comprend que l'angle est idéalement déterminé pour permettre une insertion d'une seule main du collecteur 22 et sa translation par gravité dans le fond du fourreau 32. Bien évidemment, les valeurs d'angles indiquées ne sont pas limitatives et permettent d'illustrer une gamme de valeurs données.

Afin de réduire les perturbations électrostatiques autour du collecteur 22 qui pourraient impacter l'écoulement d'air dans celui-ci, le fourreau 32 comprend ainsi une couche d'un matériau métallique qui n'est pas représentée sur les figures mais est agencée dans l'épaisseur du fourreau 21. Cette couche en matériau, par exemple métallique, est configurée pour réaliser une cage de Faraday autour du collecteur 22. Cette couche métallique est recouverte d'une couche électriquement isolante recouvrant l'intérieur du fourreau 32 mais également l'extérieur afin de permettre une manipulation sans risque du fourreau 32.

Egalement, le fourreau 32 présente une section interne sensiblement circulaire et présente extérieurement une section sensiblement rectangulaire. Cette forme rectangulaire permet de faciliter l'application d'une face 32c du fourreau 23 sur une face 16a sensiblement plane de la partie intermédiaire 16. On remarque que ladite face 32c du fourreau comprend une ouverture 40 positionnée sur le fourreau 32 de manière à ce que la tige formant la première borne 28 traverse l'ouverture 40 lorsque le fourreau 32 est dans la seconde position de collecte et afin que l'extrémité libre de la tige 28 vienne en contact avec l'électrode de collecte 26 du collecteur 22. Comme représenté en figure 3, le pourtour de l'ouverture 40 du fourreau 32 est recouvert par un revêtement 42 électriquement isolant.

Afin de maintenir le fourreau 32 dans sa seconde position de collecte, le boitier 12 porte un premier moyen aimanté 44 et le fourreau 32 porte un second moyen 46 aimanté, ces deux aimants 44, 46 étant aptes à exercer l'un sur l'autre une force d'attraction.

Enfin, pour ce qui concerne le boitier 12, la figure 4 ainsi que la figure 6 illustre un contacteur 48 apte à venir en contact avec le collecteur 22 lorsque le fourreau 32 est dans sa seconde position de collecte. Ce contacteur 48 est avantageusement relié au circuit électrique du système 10 et permet de renseigner sur la présence d'un collecteur 22 dans le fourreau 32.

On se réfère maintenant aux figures 7A, 7B, 7C, 8 et 9 qui illustrent un collecteur 22 selon l'invention qui est réalisé en un premier ensemble 50 et un second ensemble 51 qui sont distincts structurellement l'un de l'autre et qui sont reliés l'un à l'autre par des moyens aptes à réaliser une liaison rigide et détachable.

Le premier ensemble 50 comprend l'électrode de collecte 26 tandis que le second ensemble 51 comprend l'électrode de décharge 24.

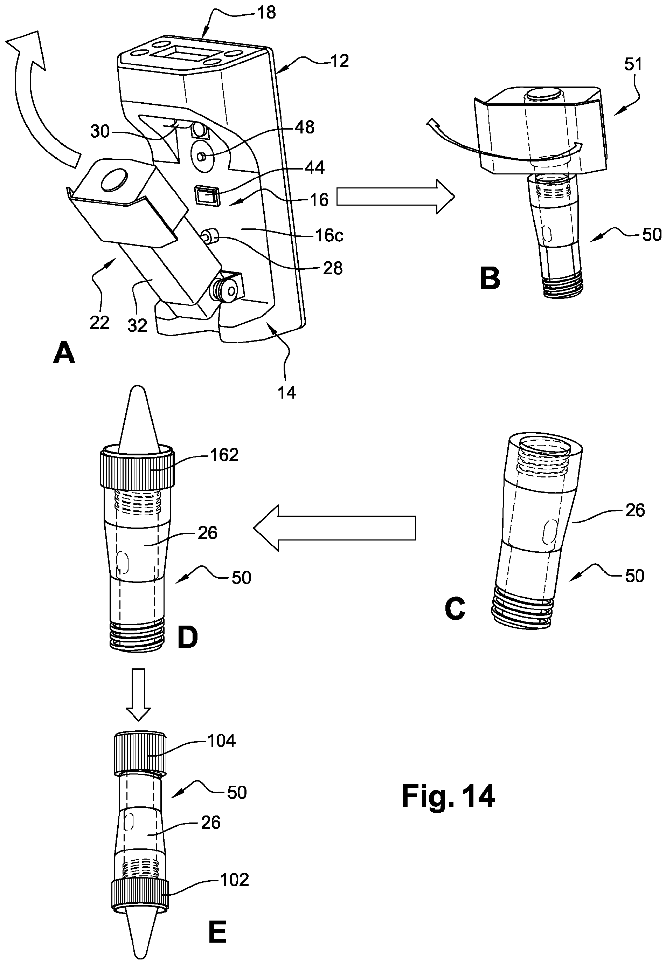

Plus précisément, le premier ensemble 50 comprend une première partie 52 comportant une première portion tubulaire 54 qui délimite la chambre de collecte. En pratique, le premier ensemble 50 est ainsi formé de la première partie 52 et de l'électrode de collecte 26 agencée à l'intérieur de la première portion tubulaire. La première portion tubulaire 54 comprend une première extrémité 54a et une seconde extrémité opposée 54b (figure 8). La première extrémité 54a comprend des premiers moyens de liaison qui sont ici un filetage interne 56 pour la liaison avec le premier ensemble 51. La première extrémité 54a et la seconde extrémité 54b sont aptes à recevoir un organe d'obturation qui sera décrit en référence à la figure 14. Plus spécifiquement, cette seconde extrémité 54b comprend un filetage externe 58 permettant la fixation par vissage d'un bouchon d'obturation (représenté en figure 14E). La première portion tubulaire 54 comprend trois surface annulaires internes, une première surface 60 tronconique à section se réduisant selon un premier sens S1 du premier axe P1, une deuxième surface cylindrique 62 et une troisième surface cylindrique 64 de diamètre inférieur au diamètre de la deuxième surface cylindrique 62. La jonction entre la deuxième surface cylindrique 62 et la troisième surface cylindrique 64 forme un épaulement annulaire interne 66. Un orifice 68 est formé au travers de la première portion tubulaire 54 et de manière à ce qu'il traverse la seconde surface cylindrique 62. L'électrode de collecte 26 se présente sous la forme d'un cylindre métallique ayant un premier bord 26a comportant une surface externe radiale 68 et une surface interne tronconique 70 à section réduisant dans le premier sens (figure 13A). Le second bord 26b est sensiblement radial (figure 13B). L'électrode de collecte 26 est montée dans la première portion tubulaire 54 et est dimensionnée de manière à ce que son second bord 26b vienne en butée selon le premier sens S1 du premier axe P1 sur l'épaulement annulaire 66. La deuxième surface cylindrique 62 assure un centrage de l'électrode de collecte 26 dans la première portion tubulaire 54.

Le second ensemble 51 comprend une seconde partie 72 comportant une seconde portion tubulaire 74 s'étendant selon le premier axe P1 et comportant une première extrémité 74a et une seconde extrémité 74b. En pratique, on comprend que le second ensemble 51 est ainsi formé de la seconde partie 72 et de l'électrode de décharge 24. La première extrémité 74a comprend des seconds moyens de liaison qui sont ici un filetage externe 76 pour la liaison avec les premiers moyens de liaison 56 de la première portion tubulaire 54. Cette première extrémité 74a comprend également un épaulement annulaire 78 sur lequel vient s'appliquer la surface radiale 68 du premier bord 26a de l'électrode de collecte 26, ce qui permet de réaliser un blocage axial de l'électrode de collecte 26 dans le second sens S2 du premier axe P1. L'électrode de collecte 26 est également engagée dans une surface cylindrique 80 de première extrémité 74a de la seconde portion tubulaire 74 de manière à réaliser un centrage de l'électrode de collecte 26 dans la seconde portion tubulaire 74 du second ensemble 51 (figure 7C).

La seconde extrémité 74b de la seconde portion tubulaire 74 est entourée extérieurement par une jupe 82 à section sensiblement rectangulaire. La forme rectangulaire permettant une application de la jupe 82 sur la face plane 16a de la partie intermédiaire 16 du boitier 12. La seconde extrémité 74b de la seconde portion tubulaire 74 comprend plusieurs ouvertures latérales 84 débouchant à l'intérieur de la jupe 82 (Figures 7C, 10 et 11). Ces ouvertures 84 réalisent en fonctionnement une entrée d'air dans le collecteur 22. La seconde extrémité 74b de la seconde portion tubulaire 74 est reliée à une embase 86 montée à l'intérieur de la jupe 82 et solidarisée à une paroi 88 de reliant le pourtour de la jupe 82. L'électrode de décharge 24 comprend une première extrémité 24a et une seconde extrémité 24b opposée et comporte entre celles-ci, une première partie 90 en forme d'aiguille qui est ici creuse mais qui pourrait être pleine. Cette aiguille 90 est insérée dans une deuxième partie 92 de diamètre supérieure au diamètre de l'aiguille 90 et qui comprend à la jonction avec l'aiguille une surface annulaire 94 arrondie convexe. La seconde partie 92 est reliée à une quatrième partie 96 par une troisième partie 98 formant une saillie annulaire. La quatrième partie 96 est quant à elle reliée à une platine 100 au niveau de la seconde extrémité 24b de l'électrode de décharge 24. L'électrode de décharge 24 est montée au travers d'un orifice de la paroi 88, de l'embase 86 et est insérée à force dans un passage tubulaire de manière à ce que la troisième partie 98 retienne l'électrode de décharge 24 dans le second sens S2 du premier axe P1. Ainsi montée dans la seconde partie 72, la première extrémité 24a de l'électrode de décharge 24 est agencée au voisinage du débouché de la première extrémité 74a de la seconde portion tubulaire 74a qui est destinée à être fixée de manière détachable à la première portion tubulaire 54.

Enfin, la figure 14 représente les différentes étapes subséquentes à une phase de collecte. Ainsi, après collecte, le fourreau 32 est déplacé dans sa première position (figure 14A). Le collecteur 22 est retiré du fourreau 32 (figure 14B) puis le premier ensemble 50 et le second ensemble 51 sont désolidarisés l'un de l'autre par dévissage (figure 14B). On ne conserve que le premier ensemble 50 (figure 14C) auquel on ajoute un bouchon 102 d'obturation (figure 14D) au niveau de sa première extrémité. Ce bouchon 102 d'obturation présente une extrémité en forme de cône pour la récupération des particules collectées. L'assemblage ainsi formé est retourné verticalement et on y insère un réactif ou tout autre produit adapté en vue de l'analyse des particules collectées et ajoute un autre bouchon 104 au niveau de la seconde extrémité.

Comme indiqué précédemment, le présent document concerne un collecteur qui est réalisé en deux ensembles structurellement distincts l'un de l'autre et qui est monté à l'état assemblé dans les moyens de réception, c'est-à-dire dans le fourreau 32. Toutefois, dans une variante du système, les moyens de réception pourraient ne recevoir que l'un du premier ensemble et du second ensemble. Par exemple, comme représenté le premier ensemble 50 peut être monté dans le fourreau tandis que le second ensemble 51 est prémonté en position de collecte sur le boîtier 12 et n'est donc pas déplacé avec les moyens de réception. Dans cette variante de réalisation, la jonction étanche entre le premier ensemble et le second ensemble se fait alors lorsque le fourreau 32 est amené en position de collecte. Selon une variante, on peut prévoir que les moyens de réception 32 comprennent une embase configurée pour recevoir l'un du premier ensemble et du second ensemble. Par exemple, le premier ensemble 50 peut être monté dans un fourreau configuré de façon à être monté sur cette embase, une extrémité 32a de cette embase étant articulée en rotation selon un second axe P2 sur le boîtier 12. Par ailleurs, on peut prévoir que les moyens de réception 32 soit articulés en translation, ou selon une combinaison de rotation et de translation, pour le passage entre la première position de montage et la seconde position de collecte.

## Revendications

1. Système (10) de collecte électrostatique de particules et/ou de micro-organismes en suspension dans un milieu gazeux comprenant un collecteur (22) électrostatique et un boîtier (12) de support du collecteur (22) électrostatique :
- le collecteur (22) comprenant :
∘ un premier ensemble comportant une première partie et une électrode de collecte disposée dans la première partie qui délimite une chambre de collecte de forme tubulaire orientée selon un premier axe (P1),
∘ un second ensemble comportant une électrode de décharge (24), de forme allongée, s'étendant selon un premier axe (P1),
- le boîtier (12) comprenant une première borne électrique apte à porter l'électrode de collecte (26) à un premier potentiel et une seconde borne électrique (30) apte à porter l'électrode de décharge (24) à second potentiel,
**caractérisé en ce qu'**il comprend en outre des moyens de réception (32) d'au moins l'un du premier ensemble et du second ensemble du collecteur (22), ces moyens de réception étant articulés à déplacement sur le boîtier (12) entre une première position de montage dudit au moins un premier ensemble et un second ensemble du collecteur (22) dans les moyens de réception et une seconde position de collecte dans laquelle la première borne électrique (28) réalise une liaison électrique avec l'électrode de collecte (26) et la seconde borne électrique (30) réalise une liaison électrique avec l'électrode de décharge (24), les moyens de réception comprenant un fourreau (32) dont une extrémité (32a) est articulée en rotation selon un second axe (P2) sur le boîtier (12) et dont l'autre extrémité (32b) délimite une ouverture (38) pour l'introduction d' une première portion tubulaire (54) du collecteur (22) dans le fourreau (32).

2. Système selon la revendication 1, dans lequel ladite première partie tubulaire dudit premier ensemble comprend ladite première portion tubulaire.

3. Système selon l'une des revendications 1 à 2, dans lequel la première borne électrique (28) et la seconde borne électrique (30) sont alignées selon un troisième axe (P3) sensiblement parallèle au premier axe (P1) lorsque les moyens de réception (32) sont dans la seconde position de collecte.

4. Système selon la revendication 3, dans lequel le troisième axe (P3) étant perpendiculaire au second axe (P2), l'axe (X) du fourreau (32) forme, en position de montage, un angle non nul avec le troisième axe (P3) et avec un quatrième axe (P4) perpendiculaire au second (P2) et troisième (P3) axes.

5. Système selon l'une des revendications 1 à 4, dans lequel les moyens de réception (32) comprennent au moins une enveloppe réalisée dans un matériau apte à réaliser une cage de Faraday autour du collecteur (22).

6. Système selon la revendication 1 et la revendication 5, dans lequel les moyens de réception comprennent le fourreau (32) comportant ladite enveloppe en matériau métallique laquelle est recouverte d'une couche électriquement isolante.

7. Système selon l'une des revendications 1 à 6, dans lequel la première borne électrique (28) comprend une tige de connexion électrique faisant saillie à l'extérieur du boîtier (12) et dans lequel les moyens de réception comprennent une ouverture (40) traversée par ladite tige lorsque les moyens de réception (32) sont dans la seconde position de collecte de manière à ce que l'extrémité libre de la tige (28) vienne en contact avec l'électrode de collecte (24), de préférence un revêtement électriquement isolant recouvre le pourtour de ladite ouverture (42).

8. Système selon l'une des revendications 1 à 7, dans lequel la seconde borne électrique (30) comprend un organe élastique ou est réalisé dans un matériau élastiquement déformable et qui est apte à être contraint élastiquement sur l'électrode de décharge (24) lorsque le collecteur (22) est en position de collecte.

9. Système selon l'une des revendications 1 à 8, dans lequel le boîtier (12) comprend également des moyens de solidarisation des moyens de réception (32) dans la seconde position de collecte.

10. Système selon la revendication 9, dans lequel les moyens de solidarisation comprennent un premier moyen aimanté (44) porté par le boîtier (12) et un second moyen aimanté (46) porté par les moyens de réception (32), le premier moyen aimanté (44) et le second moyen aimanté (46) étant aptes à exercer l'un sur l'autre une force d'attraction.

11. Système selon l'une des revendications 1 à 10, dans lequel le premier ensemble (50) et le second ensemble (51) sont structurellement distinct l'un de l'autre, le premier ensemble (50) comprenant des premiers moyens de liaison réalisant avec des seconds moyens de liaison du second ensemble (51) une liaison rigide détachable du premier ensemble avec le second ensemble.

12. Système selon la revendication 1 et la revendication 11, dans lequel :
- la première partie (52) comporte la première portion tubulaire (54) dans laquelle l'électrode de collecte (26) est centrée et bloquée axialement dans un premier sens (S1) du premier axe (P1),
- le second ensemble (51) comprend une seconde partie (72) comportant une seconde portion tubulaire (74) dans laquelle l'électrode de collecte (26) est centrée et bloquée axialement dans un second sens (S2) du premier axe (P1).

13. Système selon la revendication 11 ou 12, dans lequel l'électrode de collecte (26) est bloquée axialement dans ledit premier sens (S1) sur un épaulement annulaire (66) formée radialement à l'intérieur de la première portion tubulaire (54).

14. Système selon l'une des revendications 11 à 13, dans lequel l'électrode de collecte (26) est bloquée axialement dans ledit second sens (S2) sur un épaulement annulaire (78) formée radialement à l'intérieur de la seconde portion tubulaire (74).

15. Système selon l'une des revendications 1 à 14, dans lequel, la première borne électrique étant apte à porter l'électrode de collecte (26) à un premier potentiel et la seconde borne électrique (30) étant apte à porter l'électrode de décharge (24) à un second potentiel, l'une parmi la première borne et la deuxième borne est apte à porter l'une parmi l'électrode de décharge et l'électrode de collecte à un potentiel inférieur au potentiel de l'autre de l'électrode de décharge et de l'électrode de collecte, de préférence la seconde borne électrique (30) est apte à porter l'électrode de décharge (24) à un second potentiel inférieur au premier potentiel.

## Patentansprüche

1. System (10) zum elektrostatischen Sammeln von Partikeln und/oder Mikroorganismen in Suspension in einer gasförmigen Umgebung, umfassend einen elektrostatischen Kollektor (22) und ein Trägergehäuse (12) des elektrostatischen Kollektors (22):
- wobei der Kollektor (22) umfasst:
∘ eine erste Baugruppe, beinhaltend einen ersten Teil und eine Sammelelektrode angeordnet in dem ersten Teil, der eine Sammelkammer röhrenförmiger Form, orientiert nach einer ersten Achse (P1), umgrenzt,
∘ eine zweite Baugruppe, beinhaltend eine Entladungselektrode (24) von länglicher Form, die sich nach einer ersten Achse (P1) erstreckt,
- wobei das Gehäuse (12) einen ersten elektrischen Anschluss, der in der Lage ist, die Sammelelektrode (26) bei einem ersten Potential zu halten, und einen zweiten elektrischen Anschluss (30) umfasst, der in der Lage ist, die Entladungselektrode (24) bei einem zweiten Potential zu halten,
**dadurch gekennzeichnet, dass** es des Weiteren Aufnahmemittel (32) mindestens der einen der ersten Baugruppe und der zweiten Baugruppe des Kollektors (22) umfasst, wobei diese Aufnahmemittel zwischen einer ersten Montageposition der mindestens einen ersten Baugruppe und einer zweiten Baugruppe des Kollektors (22) in den Aufnahmemitteln und einer zweiten Sammelposition, in der der erste elektrische Anschluss (28) eine elektrische Anbindung mit der Sammelelektrode (26) ausbildet und der zweite elektrische Anschluss (30) eine elektrische Anbindung mit der Entladungselektrode (24) ausbildet, beweglich an dem Gehäuse (12) angelenkt sind,
wobei die Aufnahmemittel eine Hülse (32) umfassen, von der ein Ende (32a) an dem Gehäuse (12) nach einer zweiten Achse (P2) drehbar angelenkt ist und von der das andere Ende (32b) eine Öffnung (38) zur Einführung eines ersten röhrenförmigen Abschnitts (54) des Kollektors (22) in die Hülse (32) umgrenzt.

2. System nach Anspruch 1, wobei der erste röhrenförmige Teil der ersten Baugruppe den ersten röhrenförmigen Abschnitt umfasst.

3. System nach einem der Ansprüche 1 bis 2, wobei der erste elektrische Anschluss (28) und der zweite elektrische Anschluss (30) nach einer dritten Achse (P3) im Wesentlichen parallel zur ersten Achse (P1) ausgerichtet sind, wenn die Aufnahmemittel (32) in der zweiten Sammelposition vorliegen.

4. System nach Anspruch 3, wobei die dritte Achse (P3) senkrecht zur zweiten Achse (P2) vorliegt, die Achse (X) der Hülse (32) in Montageposition einen Winkel ungleich Null mit der dritten Achse (P3) und mit einer vierten Achse (P4), senkrecht zur zweiten (P2) und dritten (P3) Achse, bildet.

5. System nach einem der Ansprüche 1 bis 4, wobei die Aufnahmemittel (32) mindestens eine Umhüllung umfassen, ausgebildet aus einem Material, das in der Lage ist, einen Faradaykäfig um den Kollektor (22) herum auszubilden.

6. System nach Anspruch 1 und Anspruch 5, wobei die Aufnahmemittel die Hülse (32) umfassen, die die Umhüllung aus metallischem Material beinhaltet, das von einer elektrisch isolierenden Schicht bedeckt ist.

7. System nach einem der Ansprüche 1 bis 6, wobei der erste elektrische Anschluss (28) einen Stab zur elektrischen Verbindung umfasst, der an der Außenseite des Gehäuses (12) vorsteht, und wobei die Aufnahmemittel eine Öffnung (40) umfassen, die von dem Stab durchquert wird, wenn die Aufnahmemittel (32) in der zweiten Sammelposition auf eine Weise vorliegen, dass das freie Ende des Stabs (28) in Kontakt mit der Sammelelektrode (24) kommt, wobei vorzugsweise eine elektrisch isolierende Beschichtung den Umfang der Öffnung (42) bedeckt.

8. System nach einem der Ansprüche 1 bis 7, wobei der zweite elektrische Anschluss (30) ein elastisches Element umfasst oder aus einem elastisch verformbaren Material ausgebildet ist, und das in der Lage ist, elastisch auf der Entladungselektrode (24) gehalten zu werden, wenn der Kollektor (22) in Sammelposition vorliegt.

9. System nach einem der Ansprüche 1 bis 8, wobei das Gehäuse (12) ebenfalls Befestigungsmittel der Aufnahmemittel (32) in der zweiten Sammelposition umfasst.

10. System nach Anspruch 9, wobei die Befestigungsmittel ein von dem Gehäuse (12) getragenes erstes Magnetmittel (44) und ein durch die Aufnahmemittel (32) getragenes zweites Magnetmittel (46) umfassen, wobei das erste Magnetmittel (44) und das zweite Magnetmittel (46) in der Lage sind, eine Anziehungskraft aufeinander auszuüben.

11. System nach einem der Ansprüche 1 bis 10, wobei die erste Baugruppe (50) und die zweite Baugruppe (51) strukturell verschieden voneinander sind, wobei die erste Baugruppe (50) erste Anbindungsmittel umfassen, die mit den zweiten Anbindungsmitteln der zweiten Baugruppe (51) eine von der ersten Baugruppe lösbare starre Anbindung mit der zweiten Baugruppe ausbilden.

12. System nach Anspruch 1 und Anspruch 11, wobei:
- der erste Teil (52) den ersten röhrenförmigen Abschnitt (54) beinhaltet, in dem die Sammelelektrode (26) zentriert und axial in einer ersten Richtung (S1) der ersten Achse (P1) blockiert ist,
- der zweite Teil (51) einen Teil (72) umfasst, der einen zweiten röhrenförmigen Abschnitt (74) beinhaltet, in dem die Sammelelektrode (26) zentriert und axial in einer zweiten Richtung (S2) der ersten Achse (P1) blockiert ist.

13. System nach Anspruch 11 oder 12, wobei die Sammelelektrode (26) in der ersten Richtung (S1) auf einer ringförmigen Schulter (66), die radial auf der Innenseite des ersten röhrenförmigen Abschnitts (54) gebildet ist, axial blockiert ist.

14. System nach einem der Ansprüche 11 bis 13, wobei die Sammelelektrode (26) in der zweiten Richtung (S2) auf einer ringförmigen Schulter (78), die radial auf der Innenseite des zweiten röhrenförmigen Abschnitts (74) gebildet ist, axial blockiert ist.

15. System nach einem der Ansprüche 1 bis 14, wobei der erste elektrische Anschluss in der Lage ist, die Sammelelektrode (26) bei einem ersten Potential zu halten und der zweite elektrische Anschluss (30) in der Lage ist, die Entladungselektrode (24) bei einem zweiten Potential zu halten, wobei einer unter dem ersten Anschluss und dem zweiten Anschluss in der Lage ist, eine unter der Entladungselektrode und der Sammelelektrode bei einem Potential unterhalb des Potentials der anderen von der Entladungselektrode und der Sammelelektrode zu halten, wobei vorzugsweise der zweite elektrische Anschluss (30) in der Lage ist, die Entladungselektrode (24) bei einem zweiten Potential unterhalb des ersten Potentials zu halten.

## Claims

1. A system (10) for electrostatic collection of particles and/or microorganisms in suspension in a gaseous medium comprising an electrostatic collector (22) and a housing (12) for supporting the electrostatic collector (22):
- the collector (22) comprising:
∘ a first assembly including a first portion and a collection electrode disposed in the first portion which delimits a tubular-shaped collection chamber oriented along a first axis (P1),
∘ a second assembly including a discharge electrode (24), of elongated shape, extending along a first axis (P1),
- the housing (12) comprising a first electrical terminal capable of driving the collection electrode (26) to a first potential and a second electrical terminal (30) capable of driving the discharge electrode (24) to a second potential,
**characterised in that** it further comprises means for receiving (32) at least one of the first assembly and the second assembly of the collector (22), these receiving means being hinged for displacement on the housing (12) between a first mounting position of said at least one first assembly and one second assembly of the collector (22) in the receiving means and a second collection position in which the first electrical terminal (28) makes an electrical connection with the collection electrode (26) and the second electrical terminal (30) makes an electrical connection with the discharge electrode (24),
the receiving means comprising a sheath (32), one end (32a) of which is hinged in rotation along a second axis (P2) on the housing (12) and the other end (32b) of which delimits an opening (38) for inserting a first tubular portion (54) of the collector (22) into the sheath (32).

2. The system according to claim 1, wherein said first tubular portion of said first assembly comprises said first tubular portion.

3. The system according to one of claims 1 to 2, wherein the first electrical terminal (28) and the second electrical terminal (30) are aligned along a third axis (P3) which is substantially parallel to the first axis (P1) when the receiving means (32) are in the second collection position.

4. The system according to claim 3, wherein the third axis (P3) being perpendicular to the second axis (P2), the axis (X) of the sheath (32) forms, in the mounting position, a non-zero angle with the third axis (P3) and with a fourth axis (P4) which is perpendicular to the second (P2) and third (P3) axes.

5. The system according to one of claims 1 to 4, wherein the receiving means (32) comprise at least one envelope made of a material capable of making a Faraday cage around the collector (22).

6. The system according to claim 1 and claim 5, in which the receiving means comprise the sheath (32) including said envelope made of metal material which is covered with an electrically insulating layer.

7. The system according to one of claims 1 to 6, wherein the first electrical terminal (28) comprises an electrical connection rod projecting outside the housing (12) and in which the receiving means comprise an opening (40) through which said rod passes when the receiving means (32) are in the second collection position so that the free end of the rod (28) comes into contact with the collection electrode (24), preferably an electrically insulating coating covers the periphery of said opening (42).

8. The system according to one of claims 1 to 7, wherein the second electrical terminal (30) comprises an elastic member or is made of an elastically deformable material and which is capable of being elastically constrained on the discharge electrode (24) when the collector (22) is in the collection position.

9. The system according to one of claims 1 to 8, wherein the housing (12) also comprises means for securing the receiving means (32) in the second collection position.

10. The system according to claim 9, wherein the securing means comprise a first magnetised means (44) carried by the housing (12) and a second magnetised means (46) carried by the receiving means (32), the first magnetised means (44) and the second magnetised means (46) being capable of exerting an attractive force on each other.

11. The system according to one of claims 1 to 10, wherein the first assembly (50) and the second assembly (51) are structurally distinct from each other, the first assembly (50) comprising first connecting means making, with second connecting means of the second assembly (51), a detachable rigid connection of the first assembly with the second assembly.

12. The system according to claim 1 and claim 11, wherein:
- the first portion (52) comprises the first tubular portion (54) in which the collection electrode (26) is centred and axially blocked in a first direction (S1) of the first axis (P1),
- the second assembly (51) comprises a second portion (72) including a second tubular portion (74) in which the collection electrode (26) is centred and axially blocked in a second direction (S2) of the first axis (P1).

13. The system according to claim 11 or 12, wherein the collection electrode (26) is axially blocked in said first direction (S1) on an annular shoulder (66) formed radially inside the first tubular portion (54).

14. The system according to one of claims 11 to 13, wherein the collection electrode (26) is axially blocked in said second direction (S2) on an annular shoulder (78) formed radially inside the second portion tubular (74).

15. The system according to one of claims 1 to 14, wherein the first electrical terminal being capable of driving the collection electrode (26) to a first potential and the second electrical terminal (30) being capable of driving the discharge electrode (24) to a second potential, one of the first terminal and the second terminal is capable of driving one of the discharge electrode and the collection electrode to a potential which is lower than the potential of the other of the discharge electrode and the collection electrode, preferably the second electrical terminal (30) is capable of driving the discharge electrode (24) to a second potential which is lower than the first potential.
